# EUROPEAN PATENT APPLICATION

(11) **EP 2 077 659 A1**
(43) Date of publication of application: **08.07.2009**
(21) Application number: 08254131.9
(22) Date of filing: 23.12.2008
(51) Int. Cl.: H04N 1/00, G09G 3/20, A47G 1/14

(54) **Digital picture frame having a scanning function**

(30) Priority: 07.01.2008 TW 97200383 U
(71) Applicant: Aiptek International Inc., Hsin-Chu (TW)
(72) Inventor: Cheng, Ping-Fu, Da-an District Taipei City 109 (TW); Wu, Pei-Tu, Kaohsiung City 813 (TW); Chang, Ming-Chang, Miaoli County 350 (TW)
(74) Representative: Pratt, David Martin

(57) **Abstract**

A digital picture frame (11) having a scanning function comprises a scanning module (12), and a universal supporting member (13), wherein the universal supporting member further comprises a fixing seat, a ball (132), a friction unit and a support (134). The fixing seat is a spherical cavity formed in the digital picture frame for receiving the ball therein. The ball has a through hole penetrating a center of the ball. The friction unit is provided between the fixing seat and the ball. The support has a connecting portion (1341) at an end thereof which keeps a predetermined included angle with the support, wherein the connecting portion is connected to the through hole of the ball via an opening (1123) formed on a back panel of the digital picture frame, and the friction unit generates a predetermined frictional resistance between the fixing seat and the ball connected with the support, so that the support can change a supporting angle between the support and the digital picture frame, thereby changing a viewing angle of the digital picture frame. Moreover, the scanning module can be used to scan a picture and generate a digital image thereof for display on a display module.

## Description

### BACKGROUND OF INVENTION

### 1. FIELD OF THE INVENTION

The present invention relates to a digital picture frame having a scanning function, and more particularly, to a digital picture frame comprising a scanning module and a universal supporting member, for scanning a picture and displaying a digital image thereof on a display panel, wherein the universal supporting member can be used to adjust the digital picture frame to an appropriate viewing angle.

### 2. DESCRIPTION OF THE PRIOR ART

Rapid advances in the digitization technologies have brought the traditional photography into a digital era. This not only revolutionizes the photography industry but also signals the decline of the conventional film. In addition, the ever-improving digitizing equipment has also changed the forms of other image-related peripheral products.

A convention picture frame is suitable for displaying a photo developed from the conventional film, so that the photo is protected with a frame and a protective glazing and will not be damaged or easily discolor. However, a conventional picture frame can display only one photo at a time and does not allow simultaneous display of a plurality of precious images, which can be accomplished only if the frame is enlarged or a plurality of picture frames are used. With the advent of digital cameras, peripheral products for accessing digital pictures have been much diversified, including various digital picture frame products for displaying digital images.

In order to convert a traditional photo into a digital format for permanent preservation, the photo must be re-photographed digitally or go through a digital scanning process, so that the original photo is recorded in a memory device or disk as an image file. Next, the image file is transmitted via wired or wireless transmission to a digital picture frame and displayed therein for viewing. Not only the entire operation involves numerous complicated tools for re-photographing or scanning, but also the transmission of image files takes a lot of time. As a result, a picture or image on paper cannot be rapidly and conveniently transformed into a digital format and displayed in the digital picture frame.

### SUMMARY OF INVENTION

Therefore, a first objective of the present invention is to provide a digital picture frame having a scanning function, wherein a scanning module can be used to scan a picture and transform it into a digital image for being displayed on a display module.

A second objective of the present invention is to provide a digital picture frame having a scanning function, wherein a universal supporting member can be used to adjust the digital picture frame to an appropriate viewing angle.

A third objective of the present invention is to provide a digital picture frame having a scanning function, wherein a universal supporting member of the digital picture frame can be detached from and assembled to the digital picture frame as needed so as to reduce a volume of the digital picture frame for storage and packaging.

In order to achieve the aforementioned objectives, the present invention discloses a digital picture frame which comprises a digital picture frame, a scanning module, and a universal supporting member. Wherein, the universal supporting member further comprises a fixing seat, a ball, a friction unit and a support. The fixing seat is a spherical cavity formed in the digital picture frame for receiving the ball therein. The ball has a through hole penetrating a center of the ball. The friction unit is provided between the fixing seat and the ball. The support has a connecting portion at an end thereof which keeps a predetermined included angle with the support, wherein the connecting portion is connected to the through hole of the ball via an opening formed on a back panel of the digital picture frame, and the friction unit generates a predetermined frictional resistance between the fixing seat and the ball connected with the support, so that the support can change a supporting angle between the support and the digital picture frame, thereby changing a viewing angle of the digital picture frame. Moreover, the scanning module can be used to scan a picture and generate a digital image thereof for display on a display module.

In a preferred embodiment, the universal supporting member further comprises:
a fixing seat, provided in the digital picture frame as a spherical cavity;
a ball, disposed in the fixing seat and having a through hole penetrating a center of the ball;
a friction unit, provided between the fixing seat and the ball; and
a support, having a connecting portion which extends from an end of the support and keeps a predetermined angle with the support while disposed in the through hole;
wherein the connecting portion is connected to the through hole of the ball via an opening formed on the back panel of the digital picture frame, and the friction unit generates a predetermined frictional resistance between the fixing seat and the ball connected with the support, so that the support can change the supporting angle between the support and the digital picture frame.

In a preferred embodiment, the scanning module is installed in the frame body while the back panel of the frame body is provided with a slot. Therefore, photos or pictures of different sizes can be inserted into the slot for the scanning module to scan. For example, photos or pictures having a size of 3"x5" or 4"x6" as commonly seen on the market can be inserted into the slot, then scanned by the scanning module to generate a digital file thereof, and finally displayed on the display module as a digital image.

### BRIEF DESCRIPTION OF THE DRAWINGS

The invention as well as a preferred mode of use, further objectives and advantages thereof, will best be understood by reference to the following detailed description of an illustrative embodiment when read in conjunction with the accompanying drawings, wherein:
Fig. 1 illustrates a system structure of a digital picture frame having a scanning function according to the present invention;
Fig. 2 is a schematic perspective rear view of a preferred embodiment of the digital picture frame having the scanning function according to the present invention;
Fig. 3A is a schematic cross-sectional exploded view of a universal supporting member of the digital picture frame having the scanning function according to the present invention;
Fig. 3B is a schematic cross-sectional assembled view of the universal supporting member of the digital picture frame having the scanning function according to the present invention; and
Fig. 4 is a schematic view of the preferred embodiment of the digital picture frame having the scanning function according to the present invention from another viewing angle.

### DETAILED DESCRIPTION OF THE PREFERRED EMBODIMENT

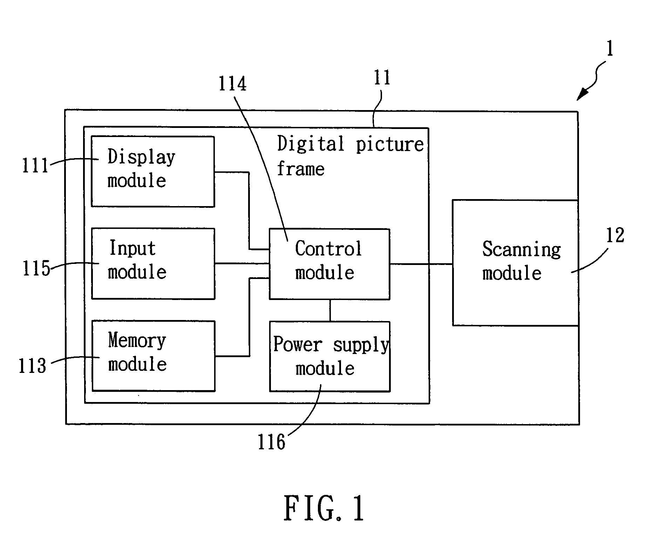

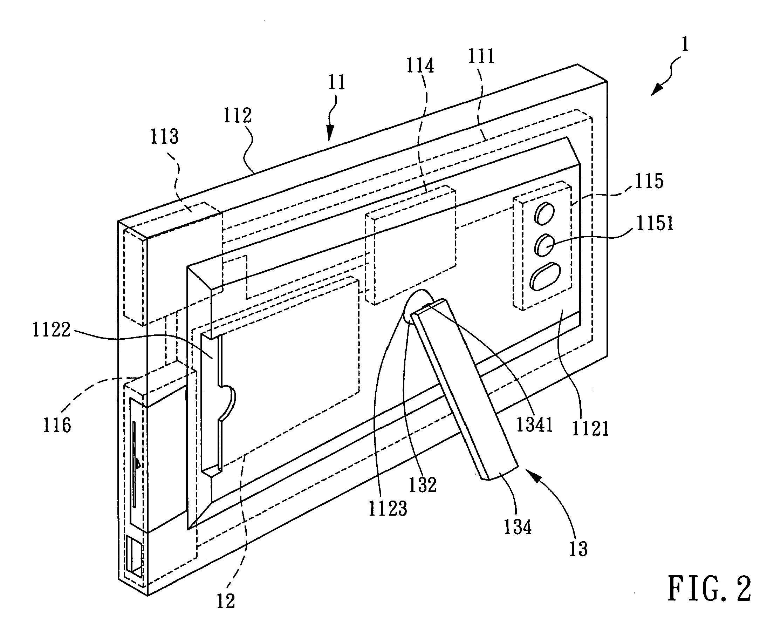

Fig. 1 illustrates a system structure of a digital picture frame 1 having a scanning function according to the present invention. As shown in Fig. 1, the digital picture frame 1 having the scanning function comprises a digital picture frame 11, a scanning module 12 and a universal supporting member 13 (shown in Fig. 2). The digital picture frame 11 further comprises a display module 111, a frame body 112 (shown in Fig. 2), a memory module 113, a control module 114, an input module 115 and a power supply module 116.

Referring to Fig. 2, which is a schematic perspective rear view of a preferred embodiment of the digital picture frame 1 having the scanning function according to the present invention. The display module 111 is installed on, and framed and secured by the frame body 112, so that a digital image can be displayed on the display module 111 of the digital picture frame 11. The display module 111 can be a liquid crystal display (LCD) device.

The memory module 113 can be used to store a digital image scanned by the scanning module 12 and provide the display module 111 with a digital image for display. The memory module 113 can be one of a re-writable non-volatile memory, a flash memory, an electric programmable read-only memory (EPROM) and a micro hard drive (Micro-HD).

The control module 114 is used to control the display module 111 to display a digital image, and the scanning module 12 to perform scanning, so that the scanned image is stored in the memory module 113. The input module 115 is disposed at a predetermined location on the frame body 112 for controlling the scanning module 12 via the control module 114 to perform scanning, and controlling the display module 111 via the control module 114 to change images on display. In addition, the input module 115 can further comprise at least one push button 1151 (as shown in Fig. 2) located on a back panel 1121 of the frame body 112, so that the scanning module 12 can be directly driven to perform scanning by pressing the push button 1151.

The power supply module 116 provides necessary electric power to the digital picture frame 11, and can be one of a lithium battery, a nickel-hydrogen battery, a hydrogen-oxygen fuel cell, a carbon-zinc battery, a nickel-cadmium battery, a fuel cell, and a rechargeable battery. In addition, the power supply module 116 can also make an outward connection via one of an USB port and a transformer for re-charging. Since the power supply module 116 described herein is a commercially available product of prior art and does not constitute a technical feature of the present invention, a detailed description of the power supply module 116 is omitted in this specification.

The scanning module 12 is disposed at a predetermined location on the frame body 112. In the preferred embodiment of the present invention, the scanning module 12 is installed in the frame body 112 while the back panel 1121 of the frame body 112 is provided with a slot 1122. Therefore, photos or pictures of different sizes can be inserted into the slot 1122 for the scanning module 12 to scan. For example, photos or pictures having a size of 3"x5" or 4"x6" as commonly seen on the market can be inserted into the slot 1122, then scanned by the scanning module 12 to generate a digital file thereof, and finally displayed on the display module 111 as a digital image. Now that the scanning module 12 is well known in the industry, a detailed description thereof will not be given herein.

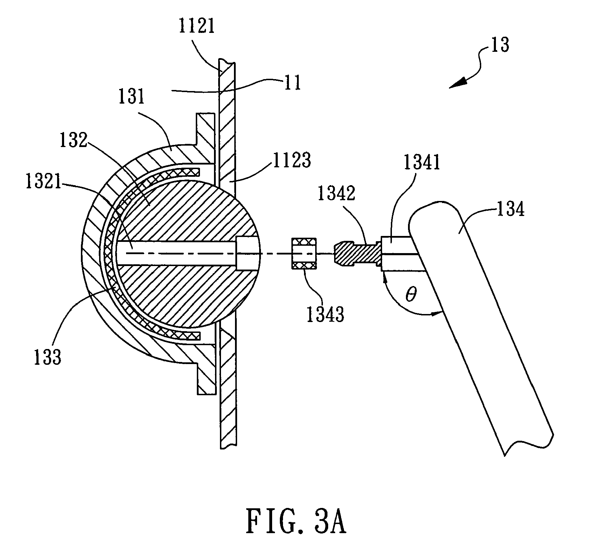

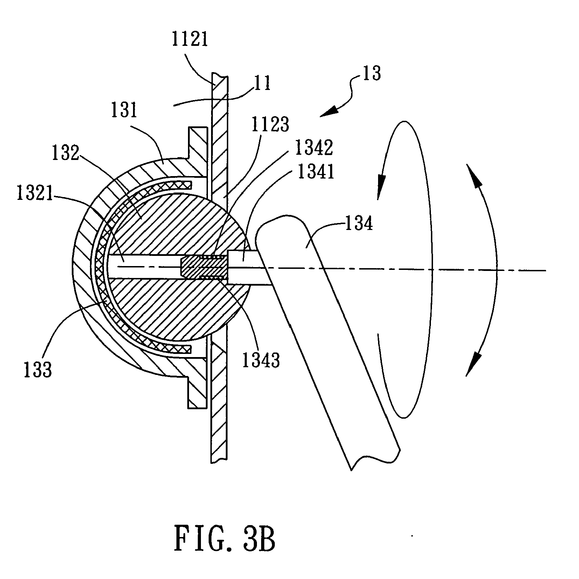

Figs. 3A and 3B are a schematic cross-sectional exploded view and a schematic cross-sectional assembled view of the universal supporting member 13 of the digital picture frame 11 having the scanning function according to the present invention, respectively. As shown in Fig. 3A, the universal supporting member 13 comprises a fixing seat 131, a ball 132, a friction unit 133 and a support 134, wherein the fixing seat 131 is a spherical cavity formed in the digital picture frame 11; the ball 132 is mounted in the fixing seat 131 and has a through hole 1321 penetrating a center of the ball 132; the friction unit 133 is provided between the fixing seat 131 and the ball 132; and the support 134 has a connecting portion 1341 extending from an end thereof, wherein the connecting portion 1341 keeps a predetermined included angle θ with the support 134 and is inserted in the through hole 1321 of the ball 132.

The friction unit 133 serves to increase a friction between the ball 132 and the fixing seat 131. The ball 132 can rotate freely in the fixing seat 131 to various angles, thereby indirectly adjusting the support 134 from which the connecting portion 1341 extends to an arbitrary angle in relation to the back panel 1121 of the digital picture frame 11. In addition, regardless of the angle the support 134 is adjusted to, the friction provided by the friction unit 133 can prevent the support 134 from rocking, allowing the support 134 to change a supporting angle with respect to the digital picture frame 11. The friction unit 133 can be made of one of rubber, plastic, and silica gel.

In the preferred embodiment of the present invention, the connecting portion 1341 has a generally columnar shape and an end portion which is connected to the support 134 and has a polygonal perimeter (for example, of a quadrilateral shape, a hexagonal shape or another shape with corners). The through hole 1321 of the ball 132 has an inner diameter generally corresponding to an exterior shape of the connecting portion 1341. The connecting portion 1341 further has an annular groove 1342 formed on a surface thereof for combining with a washer 1343.

When the connecting portion 1341 is inserted in the through hole 1321 of the ball 132, the end portion of the connecting portion 1341 which has the polygonal perimeter is also inserted into the through hole 1321 of the ball 132. As a result, the ball 132 can move simultaneously with the connecting portion 1341, wherein the washer 1343 installed in the annular groove 1342 allows the connecting portion 1341 to be connected more tightly with the through hole 1321 of the ball 132. The washer 1343 can be made of one of rubber, plastic, and silica gel.

As shown in Fig. 3B, the connecting portion 1341 is connected to the through hole 1321 of the ball 132 via an opening 1123 formed on the back panel 1121 of the frame body 112, wherein the opening 1123 on the back panel 1121 corresponds to the fixing seat 131 and has a diameter smaller than a diameter of the ball 132, so that the back panel 1121 can keep the ball 132 embedded in the fixing seat 131 and prevent the ball 132 from falling off. Furthermore, the friction unit 133 provides a predetermined frictional resistance between the fixing seat 131 and the ball 132 connected with the support 134 to allow the support 134 to change its supporting angle in relation to the digital picture frame 11.

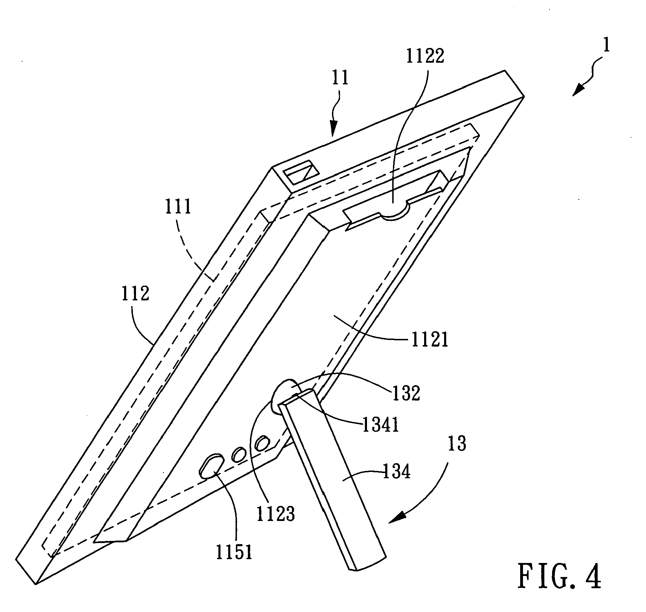

Referring to Fig. 4, which is a schematic view of the preferred embodiment of the digital picture frame having the scanning function according to the present invention from another viewing angle, the digital picture frame 11 has been rotated to an appropriate placing angle while the universal supporting member 13 has also been rotated so that the digital picture frame 11 stands in a portrait orientation. The input module 115 can be operated to make digital images displayed on the display module 111 correspond to the rotation angle of the digital picture frame 11, so as to provide a more suitable viewing angle and a different viewing experience. It is worth mention that, when adjusted by using the universal supporting member 13, the placing angle of the digital picture frame 11 is not limited to only one angle, nor is it limited by an exterior shape of the digital picture frame 11. Therefore, the display module 111 can be adjusted to a more appropriate viewing angle by preventing such disadvantageous factors as reflection from the display module 111 and refraction of ambient light.

In summary, the digital picture frame 1 having the scanning function according to the present invention comprises a digital picture frame 11, a scanning module 12 and a universal supporting member 13. The digital picture frame 11 further comprises a display module 111, a frame body 112, a memory module 113, a control module 114, an input module 115 and a power supply module 116. The universal supporting member 13 further comprises a fixing seat 131, a ball 132, a friction unit 133 and a support 134.

The scanning module 12 is installed in the frame body 112 while the frame body 112 has a back panel 1121 formed with a slot 1122, so that photos or pictures of various sizes can be inserted into the slot 1122, scanned by the scanning module 12 to generate digital image files thereof, and presented on the display module 111.

The fixing seat 131 of the universal supporting member 13 is a spherical cavity formed in the digital picture frame 11 for receiving the ball 132 therein, wherein the ball 132 has a through hole 1321 penetrating a center thereof. The friction unit 133 is provided between the fixing seat 131 and the ball 132. The support 134 has a connecting portion 1341 at an end thereof which keeps a predetermined included angle with the support 134.

The connecting portion 1341 is connected to the through hole 1321 of the ball 132 via an opening 1123 formed on the back panel 1121 of the digital picture frame 11. The friction unit 133 provides a predetermined frictional resistance between the fixing seat 131 the ball 132 connected with the support 134, so that the support 134 can change its supporting angle with respect to the digital picture frame 11. A picture can be scanned by the scanning module 12 to produce a digital image thereof for display on the display module 111.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A digital picture frame having a scanning function, comprising:
a digital picture frame, for displaying a digital image;
a scanning module, provided at a predetermined location on the digital picture frame for scanning a picture so that a digital image of the picture is obtained for being displayed in the digital picture frame; and
a universal supporting member, connected to a back panel of the digital picture frame for adjusting a supporting angle formed between the universal supporting member and the digital picture frame in order to change a viewing angle of the digital picture frame.

2. The digital picture frame as claimed in Claim 1, wherein the universal supporting member further comprises:
a fixing seat, provided in the digital picture frame as a spherical cavity;
a ball, disposed in the fixing seat and having a through hole penetrating a center of the ball;
a friction unit, provided between the fixing seat and the ball; and
a support, having a connecting portion which extends from an end of the support and keeps a predetermined angle with the support while disposed in the through hole;
wherein the connecting portion is connected to the through hole of the ball via an opening formed on the back panel of the digital picture frame, and the friction unit generates a predetermined frictional resistance between the fixing seat and the ball connected with the support, so that the support can change the supporting angle between the support and the digital picture frame.

3. The digital picture frame as claimed in Claim 2, wherein the connecting portion has a columnar shape and an end portion which is connected to the support and has a polygonal perimeter; the through hole of the ball has an inner diameter corresponding to an exterior shape of the connecting portion; and the connecting portion further has an annular groove formed on a surface thereof for combining with a washer.

4. The digital picture frame as claimed in Claim 2, wherein the friction unit is made of one of the following: rubber, plastic and silica gel; wherein the opening on the back panel corresponds to the fixing seat and has a diameter smaller than a diameter of the ball.

5. The digital picture frame as claimed in Claim 1, wherein the digital picture frame further comprises:
a display module, for outputting the digital image;
a frame body, for framing and securing the display module therein;
a memory module, for storing the digital image obtained from the scanning module by scanning the picture and for providing the digital image to be displayed by the display module;
a control module, for controlling the display module to display the digital image and the scanning module to perform scanning;
an input module, provided at a predetermined location on the frame body for inputting a control signal for controlling the control module; and
a power supply module, for providing a necessary electric power to the digital picture frame.

6. The digital picture frame as claimed in Claim 5, wherein the display module is a liquid crystal display (LCD) device; wherein the memory module is one of the following: a re-writable non-volatile memory, a flash memory, an electric programmable read-only memory (EPROM) and a micro hard drive (Micro-HD); wherein the power supply module is one of the following: a lithium battery, a nickel-hydrogen battery, a hydrogen-oxygen fuel cell, a carbon-zinc battery, a nickel-cadmium battery, a fuel cell, and a rechargeable battery.

7. The digital picture frame as claimed in Claim 5, wherein the power supply module makes an outward connection via one of an USB port and a transformer for re-charging.

8. A digital picture frame having a scanning function, comprising:
a display module, for displaying a digital image;
a frame body, for framing and securing the display module therein;
a scanning module, disposed at a predetermined location on the frame body for scanning a picture so that a digital image of the picture is obtained for being displayed on the display module;
a memory module, for storing the digital image obtained from the scanning module by scanning the picture and for providing the digital image to be displayed by the display module;
a control module, for controlling the display module to display the digital image and the scanning module to perform scanning;
an input module, provided at a predetermined location on the frame body for inputting a control signal for controlling the control module; and
a power supply module, for providing a necessary electric power to the digital picture frame.

9. The digital picture frame as claimed in Claim 8, further comprising a universal supporting member connected to a back panel of the digital picture frame, wherein the universal supporting member comprises:
a fixing seat, provided in the digital picture frame as a spherical cavity;
a ball, disposed in the fixing seat and having a through hole penetrating a center of the ball;
a friction unit, provided between the fixing seat and the ball; and
a support, having a connecting portion which extends from an end of the support and keeps a predetermined angle with the support while disposed in the through hole;
wherein the connecting portion is connected to the through hole of the ball via an opening formed on the back panel of the digital picture frame, and the friction unit generates a predetermined frictional resistance between the fixing seat and the ball connected with the support, so that the support can change the supporting angle between the support and the digital picture frame.

10. The digital picture frame as claimed in Claim 9, wherein the connecting portion has a columnar shape and an end portion which is connected to the support and has a polygonal perimeter; the through hole of the ball has an inner diameter corresponding to an exterior shape of the connecting portion; and the connecting portion further has an annular groove formed on a surface thereof for combining with a washer.

11. The digital picture frame as claimed in Claim 9, wherein the friction unit is made of one of the following: rubber, plastic and silica gel; wherein the opening on the back panel corresponds to the fixing seat and has a diameter smaller than a diameter of the ball.
